# EUROPÄISCHE PATENTSCHRIFT

(11) **EP 1 234 849 B1**
(45) Veröffentlichungstag und Bekanntmachung des Hinweises auf die Patenterteilung: **23.11.2011**
(21) Anmeldenummer: 02003889.9
(22) Anmeldetag: 21.02.2002
(51) Int. Cl.: C08J 7/12

(54) **Verfahren zur Behandlung von Kuststoffoberflächen**
Process for the treatment of plastic surfaces
Procédé pour le traitement des surfaces en matière plastique

(30) Priorität: 23.02.2001 DE 10108723
(43) Veröffentlichungstag der Anmeldung: 28.08.2002
(73) Patentinhaber: Air Liquide Deutschland GmbH, 40235 Düsseldorf (DE); Messer Group GmbH, 65843 Sulzbach (DE)
(72) Erfinder: Barbe, Joachim, Dr., 47918 Tönisvorst (DE); van Bonn, Rolf., 47269 Duisburg (DE); Rödel, Siegfried., 47807 Krefeld (DE)
(74) Vertreter: Kahlhöfer, Hermann

(56) Entgegenhaltungen:
- EP-A- 0 730 948
- EP-A2- 0 196 468
- WO-A-96/25454
- DE-A- 19 832 559

## Beschreibung

### Verfahren zur Behandlung von Kunststoffoberflächen

Die Erfindung betrifft ein Verfahren zur Behandlung von Kunststoffoberflächen durch Gasphasenfluorierung.

Die EP 0 566 883 B1 (interne Bezeichnung MG 1841) beschreibt ein Verfahren zur Fluorierung von Innenoberflächen von Kunststoffbehältern mit einem Gas, das z.B. 1 % Fluor enthält, bei einem Druck von 2 oder 10 bar und einer Oberflächentemperatur von 60-250 °C.

Weiterhin wird in der US-A-4 296 151 ein Fluorierungsverfahren beschrieben, bei dem ein Gemisch aus 90% N₂ und 10% F₂ so lange mit Überdruck in einen Behälter eingegeben wird, bis die in ihm enthaltene Luft verdrängt ist. Nach einer Behandlungsdauer von etwa 5 Minuten sind die Kunststoffteile für eine Lackierung ausreichend benetzbar. Das Verfahren erfordert relativ lange Behandlungszeiten.

Die EP 0 629 654 B1 beschreibt ein Verfahren zur Vorbehandlung von zu lackierenden Kunststoffteilen, wobei ein Behandlungsgas mit 3-5 Vol.-% Fluor, 10-16 Vol.-% Sauerstoff und einem Inertgas als restliches Gas bei einem absoluten Druck von 333 bis 400 mbar für eine Behandlungszeit von 10 bis 180 Sekunden eingesetzt wird. Nachteilig ist hierbei, daß nach dem Evakuieren nennenswerte Mengen an reaktivem Gas in der Vakuumkammer verbleiben. Während der Dosierung des Behandlungsgases treten deshalb inhomogene, undefinierte Gaszusammensetzungen auf.

Aus DE-A-198 32 559 ist ein Fluorierungsverfahren bekannt, bei dem ein Gasgemisch mit einem Fluoranteil von 5 bis 20% bei einem Behandlungsdruck von 40 mbar eingesetzt wird. Aus EP-A-0 196 468 ist ein Fluorierungsverfahren mit einem Gasgemisch enthaltend 3 bis 10 Vol-% Fluor bei einem Behandlungsdruck von 100 bis 900 mbar bekannt.

Der Erfindung liegt die Aufgabe zugrunde, ein Verfahren zur Vorbehandlung von Kunststoffoberflächen bereitzustellen, das reproduzierbarer durchführbar ist.

Gelöst wurde die Aufgabe durch ein Verfahren mit den in Anspruch 1 beschriebenen Merkmalen.

Bei dem Verfahren zur Behandlung von Kunststoffoberflächen durch Gasphasenfluorierung wird eine Reaktionskammer mit dem Behandlungsgut mit Kunststoffoberfläche auf einen Druck von nicht mehr als 10 mbar absolut oder von einem Zehntel des Behandlungsdruckes oder weniger evakuiert und ein fluorhaltiges Gasgemisch definierter Zusammensetzung in die Reaktionskammer bis zum Erreichen eines Behandlungsdruckes eingeführt. Das Verfahren wird zur Gasphasenfluorierung thermoplastischer Kunststoffe, insbesondere von Polyolefinen wie Polyethylen (PE), Polypropylen (PP) oder Polystyrol (PS), vorteilhaft eingesetzt.

Durch den Evakuierschritt vor der Einführung des fluorhaltigen Gasgemisches in dem Verfahren wird eine homogene Atmosphäre des Behandlungsgases erzielt. Die homogene Gasphase während der Behandlung mit dem fluorhaltigen Gasgemisch führt zu reproduzierbaren Bedingungen bei der Fluorierung und zu einer sehr gleichmäßigen Fluorierung der Oberfläche des Behandlungsgutes. Der Evakuierschritt bewirkt zudem einen geringen Sauerstoffgehalt in der Behandlungsatmosphäre. In der Regel liegt der Sauerstoffgehalt in der Behandlungsatmosphäre nicht höher als 1 Vol.-% Sauerstoff, vorzugsweise nicht höher als 0,5 Vol.-% Sauerstoff, besonders bevorzugt nicht höher als 0,2 Vol.-% Sauerstoff, insbesondere nicht höher als 0,1 Vol.-% Sauerstoff. Ein geringer Sauerstoffgehalt in der Gasatmosphäre während der Fluorierung wirkt sich günstig auf die Fluorierungsergebnisse aus.

Bei dem Verfahren wird als Behandlungsgas ein fertiges fluorhaltiges Gasgemisch (Fertiggemisch, vorgemischtes Reaktionsgas) eingesetzt. Das Behandlungsgas enthält vorteilhaft 5 bis 15 Vol.-% Fluor (F₂). Das Behandlungsgas besteht vorzugsweise aus Fluorgas und einem inerten Gas wie Stickstoff oder einem Edelgas wie Helium oder Argon oder einem inerten Gasgemisch. Das Behandlungsgas ist vorzugsweise praktisch sauerstofffrei, das heißt das Behandlungsgas weist mindestens eine technische Sauerstofffreiheit auf, insbesondere enthält das Behandlungsgas weniger als 0,2 Vol.-% Sauerstoff, vorzugsweise weniger als 0,1 Vol.-% Sauerstoff. Das als Behandlungsgas eingesetzte Fertiggemisch besteht vorteilhaft aus 10 Vol.-% Fluor in Stickstoff (d.h. 90 Vol.-% Stickstoff). Bei dem Verfahren wird in der Regel zur Fluorierung die Gasatmosphäre in dem Behandlungsraum (in der Reaktionskammer) weitgehend oder praktisch vollständig durch das Behandlungsgas (Fertiggemisch) ersetzt. Das Reaktionsgas (fluorhaltiges Gas) wird als Fertiggasgemisch in Druckgasbehältern, insbesondere Druckgasflaschen, bereitgestellt.

Der Fluorierungsschritt in dem Verfahren erfolgt vorteilhaft in Abwesenheit von Sauerstoff (technische Sauerstofffreiheit; vorzugsweise weniger als 0,2 Vol.-% Sauerstoff im Behandlungsgas). Das bedeutet, daß nicht nur ein sauerstofffreies Fertiggemisch eingesetzt wird, sondern auch Maßnahmen getroffen werden, daß bei der Fluorierung die Sauerstofffreiheit des Behandlungsgases über die gesamte Behandlungszeit erhalten bleibt. Die weitgehende oder vollständige Sauerstofffreiheit während der Fluorierung wird durch eine Evakuierung des Behandlungsraumes (z. B. Vakuumkammer) mit dem Behandlungsgut auf einen absoluten Druck von vorteilhaft nicht mehr als 10 mbar (absolut) oder nicht mehr als einem Zehntel des späteren Behandlungsdruckes (siehe unten), besonders vorteilhaft weniger als 5 mbar, insbesondere weniger als 1 mbar, erreicht. Je niedriger der erreichte Druck bei der Evakuierung ist, um so günstiger für die Durchführung des Verfahrens. Beispielsweise wird bei einem Behandlungsdruck (Enddruck) von 250 mbar auf einen Druck von mindestens 25 mbar (absolut) evakuiert.

Zur Fluorierung wird das Fertiggemisch in den evakuierten Raum (Behandlungsraum, Reaktionskammer) eingeleitet bis der gewünschte Druck (Reaktionsdruck) erreicht ist. Die Reaktionskammer weist beispielsweise einen Raum mit einem Volumen von 1 bis 5 Kubikmetern auf.

Der Verfahrensschritt der Fluorierung beginnt mit der Zuführung des Fertiggemisches in den evakuierten Raum. Das Fertiggemisch wird dem Raum zugeführt bis ein vorbestimmter Druck (Enddruck) in dem Behandlungsraum erreicht ist. Dieser Enddruck liegt vorteilhaft bei einem absoluten Druck im Bereich von 25 bis 250 mbar, vorzugsweise 50 bis 200 mbar, besonders bevorzugt 50 bis 150 mbar, insbesondere 75 bis 150 mbar. Dieser sogenannte Enddruck (Maximaldruck oder Behandlungsdruck) mit dem Behandlungsgas wird für einen bestimmten Zeitraum aufrechterhalten (in der Regel konstant gehalten). Zum Abschluß der Behandlung mit dem Fluorierungsgasgemisch wird der Behandlungsraum evakuiert. Der beim Evakuieren hergestellte Druck (Unterdruck) entspricht vorteilhaft dem Evakuierschritt vor der Fluorbehandlung. Danach wird der Behandlungsraum vorteilhaft mit einem Spülgas wie trockener Luft oder vorzugsweise Stickstoffgas gespült. In der Regel hat das Spülgas bei der Einführung in die Reaktionskammer Raumtemperatur. Die Spülung erfolgt vorteilhaft bei Unterdruck, z. B. bei 400 bis 800 mbar, insbesondere bei 600 mbar absolut.

Als Kontaktzeit des Behandlungsgutes mit dem Reaktionsgasgemisch (Fluor-Gasgemisch) wird das Zeitintervall von dem Beginn der Fluorgaszuführung bis zur Evakuierung des Behandlungsraumes auf ein Endvakuum bezeichnet. Zur präziseren Festlegung des Zeitintervalles wird als Anfangszeitpunkt die Zeit des Erreichens von einem absoluten Druck von 25 mbar bei der Fertiggasgemisch-Zufuhr und als Endzeitpunkt die Zeit des Erreichens von einem absoluten Druck von 25 mbar nach Absenkung des Enddruckes (oder Behandlungsdruckes) durch Evakuieren definiert. Als Behandlungszeit wird das Zeitintervall, in dem der Enddruck vorliegt, beginnend mit dem Erreichen des Enddruckes und endend mit dem Unterschreiten des Enddruckes durch Evakuieren, verstanden, wobei der Enddruck ein Druckwert oder ein Druckbereich sein kann. Beispielsweise kann der Enddruck kontinuierlich oder schrittweise während der Behandlung gezielt verändert werden. Die Kontaktzeit kann durch die erforderlichen Zeiträume für die Evakuierschritte (je nach Größe des Behandlungsraumes) mehr oder weniger lang sein. Die Behandlungszeit liegt im allgemeinen im Bereich von 1 Sekunde bis 10 Minuten, vorzugsweise im Bereich von 5 bis 60 Sekunden, besonders bevorzugt im Bereich von um 5 bis um 30 Sekunden, insbesondere im Bereich von 10 bis 20 Sekunden. Die Kontaktzeit liegt im allgemeinen im Bereich von 1 bis 30 Minuten, insbesondere 5 bis 15 Minuten.

Die Behandlung mit dem Fertiggasgemisch erfolgt im allgemeinen in einer Temperatur im Bereich zwischen 0 und 100° C, vorzugsweise im Bereich von 10 bis 60° C, insbesondere im Bereich von 20 bis 50° C. Die Temperaturen beziehen sich auf die Temperatur des zugeführten Fertiggemisches und der Reaktionskammer zu Beginn der Behandlung. Die Temperatur in der Reaktionskammer kann sich während der Behandlung infolge der exothermen Reaktion erhöhen. Die Reaktionskammer wird vorzugsweise beheizt, besonders bevorzugt mit konstanter Beheizung, beispielsweise bei 35° C.

Es wurden besonders vorteilhafte Verfahrensbedingungen für die Vorbehandlung von Kunststoffoberflächen durch Gasphasenfluorierung gefunden, die in Tabelle 1 aufgeführt sind. Die Versuche wurden mit einer auf 35° C beheizten Reaktionskammer und Fertiggasgemisch von Raumtemperatur (in der Regel um 15 bis 30 ° C, z.B. 20 bis 25 ° C) durchgeführt. Während der Behandlung wurde das Behandlungsgas umgepumpt. Die Güte der durch die Fluorierung erhaltenen Oberflächen wurde anhand der bestimmten Oberflächenenergie ermittelt. Zur Prüfung der Vorbehandlung nach DIN 53364 wurde Testtinte eingesetzt, die bei der Fa. Ahlbrandt System GmbH, D-36341 Lauterbach/Hessen, erhältlich ist. Bei Versuch Nr. 2 wurde der Enddruck (Behandlungsdruck) schrittweise erhöht.

Eine außergewöhnlich kurze Behandlungszeit erlauben die Verfahrensbedingungen von Versuch Nr. 4 in Tabelle 1. Das erfindungsgemäße Verfahren wird dementsprechend mit einem Gasgemisch von 10 Vol.-% Fluor in Stickstoff bei Abwesenheit von Sauerstoff (mindestens technische Sauerstofffreiheit) bei einem Reaktionsdruck im Bereich von um 150 mbar absolut, durchgeführt. Die anfängliche Temperatur bei der Fluorierung liegt vorzugsweise im Bereich von 15 bis 50 °C, insbesondere im Bereich von 15 bis 30 °C. Die extrem kurze Behandlungszeit ermöglichst einen besonders wirtschaftlichen Einsatz der Fluorierung.

Die Reaktion des fluorhaltigen Gasgemisches erfolgt vorzugsweise in einer abgedunkelten oder dunklen Reaktionskammer. Auf diese Weise werden photochemische Reaktionen vermieden, die zu unreproduzierbaren Ergebnissen führen können.

Mit dem Verfahren gemäß der Erfindung werden Kunststoffoberflächen erhalten, die vorteilhafte Oberflächenenergien (s. Tabelle 1) aufweisen und sehr gut lackierbar sind. Die Anwendung des Verfahrens ist nicht auf die Herstellung lackierbarer Kunststoffoberflächen begrenzt. Das Verfahren ist überall dort einsetzbar, wo eine Erhöhung der Oberflächenenergie von Kunststoffteilen oder kunststoffbeschichteten Teilen für eine nachfolgende Behandlung gewünscht ist, z.B. zum Verkleben, Bedrucken, Färben von Kunststoffen, z. B. PP oder PE. Die erhaltenen Oberflächeneigenschaften sind bei den Verfahren gemäß der Erfindung besonders reproduzierbar, insbesondere durch die Einwirkung von Gasgemischen mit definierter Zusammensetzung auf das Behandlungsgut.

**Tabelle 1: Reaktionsbedingungen und Versuchsergebnisse der Fluorierung**

| Versuch | Fluorierung | | | Spülung | | Oberflächenspannung |
|---|---|---|---|---|---|---|
| Nr. | Gemisch | Enddruck | Behand-lungszeit | Druck (N2) | Anzahl | mN/m * |
| 1** | 10% F2 | 75 mbar | 3 Min | 600 mbar | 1 | 64 |
| 2** | 10% F2 | 100 mbar | 3,5 Min | 600 mbar | 2 | > 64 |
| | | + 50 mbar | 1 Min. | | | |
| | | + 75 mbar (gesamt 225 mbar) | 1,3 Min | | | |
| 3** | 10% F2 | 100 mbar | 3 Min | 600 mbar | 1 | 64 |
| 4 | 10% F2 | 150 mbar | 0,1 Min | 600 mbar | 2 | 59 |
| 5** | 10% F2 | 75 mbar | 6 Min | 600 mbar | 2 | 64 |

| | | | | | | |
|---|---|---|---|---|---|---|
| * Ausgangswert 28 ∼35 mN/m **Vergleichsversuch | | | | | | |

## Patentansprüche

1. Verfahren zur Behandlung von Kunststoffoberflächen durch Gasphasenfluorierung, bei dem eine Reaktionskammer mit dem Behandlungsgut mit Kunststoffoberfläche auf einen Druck von nicht mehr als 10 Millibar absolut oder einem Zehntel des Behandlungsdruckes oder weniger evakuiert wird, **dadurch** gekenntzeichnet, dass ein fluorhaltiges Gasgemisch umfassend 10 Vol.-% Fluor, Rest Stickstoff, das zumindest technisch sauerstofffrei ist, bis zum Erreichen eines Behandlungsdrucks von 150 Millibar absolut in die Reaktionskammer eingeführt wird.

2. Verfahren nach Anspruch 1, bei dem die anfängliche Temperatur bei Einführung des fluorhaltigen Gasgemisches bei 15 bis 50°C, bevorzugt bei 15 bis 30°C liegt.

## Claims

1. Process for the treatment of plastic surfaces by means of gasphase fluorination, in which a reaction chamber containing the goods to be treated having a plastic surface is evacuated to a pressure of not more than 10 millibar absolute or a tenth of the treatment pressure or less, **characterized in that** a fluorine-containing gas mixture comprising 10% by volume of fluorine balance nitrogen which is at least industrially oxygenfree, is introduced into the reaction chamber until a treatment pressure of 150 millibar absolute has been reached.

2. Process according to Claim 1, in which the initial temperature on introduction of the fluorine-containing gas mixture is from 15 to 50°C, preferably from 15 to 30°C.

## Revendications

1. Procédé de traitement de surfaces plastiques par fluoration en phase gazeuse, selon lequel une chambre de réaction contenant le produit à traiter à surface plastique est évacuée à une pression inférieure ou égale à 10 millibar absolu ou un dixième de la pression de traitement ou moins, **caractérisé en ce qu'**un mélange gazeux contenant du fluor, comprenant 10 % en volume de fluor, le reste étant de l'azote, qui est au moins techniquement exempt d'oxygène, est introduit dans la chambre de réaction jusqu'à atteindre une pression de traitement de 150 millibar absolu.

2. Procédé selon la revendication 1, selon lequel la température initiale lors de l'introduction du mélange gazeux contenant du fluor est de 15 à 50 °C, de préférence de 15 à 30 °C.
